# EUROPÄISCHE PATENTSCHRIFT

(11) **EP 2 158 054 B1**
(45) Veröffentlichungstag und Bekanntmachung des Hinweises auf die Patenterteilung: **16.07.2014**
(21) Anmeldenummer: 08758186.4
(22) Anmeldetag: 16.06.2008
(51) Int. Cl.: B23D 45/04, B23D 45/10, B23D 47/04, B23D 47/06

(54) **TRENNVORRICHTUNG FÜR EINE FLIESSBANDÄHNLICHE FERTIGUNGSLINIE**
SEPARATING DEVICE FOR A PRODUCTION LINE OF THE BAND CONVEYOR TYPE
DISPOSITIF DE SÉPARATION POUR UNE LIGNE DE FABRICATION DE TYPE CONVOYEUR À BANDE

(30) Priorität: 20.06.2007 DE 102007028417
(43) Veröffentlichungstag der Anmeldung: 03.03.2010
(73) Patentinhaber: Grenzebach Maschinenbau GmbH, 86663 Asbach-Bäumenheim (DE)
(72) Erfinder: SCHÄFERLING, Rudolf, 86657 Bissingen (DE)
(74) Vertreter: Kindermann, Peter
(86) Internationale Anmeldenummer: PCT/DE2008/000989
(87) Internationale Veröffentlichungsnummer: WO 2008/154902

(56) Entgegenhaltungen:
- DE-A1- 3 713 260
- DE-A1- 4 018 446
- DE-A1- 19 756 622
- FR-E- 58 807
- GB-A- 2 020 606
- US-A- 2 682 307

## Beschreibung

Die Erfindung betrifft ein Verfahren und eine Vorrichtung zum Trennen von Materialien die in einem fließbandähnlichen Produktionsprozess hergestellt werden und zum Zwecke eines gewünschten Auslieferungszustandes in bestimmte Formate aufgetrennt werden müssen.

US2682307 offenbart eine Vorrichtung zum Abtrennen von, in einem kontinuierlichen Produktionsprozess geliefertem, Material in bestimmbare Längen enthaltend ein Transportband, ein Schlitten, und zwei Sägeblätter wobei
- die Abtrennung des Materials erfolgt über zwei angetriebene kreisförmige Sägeblätter,
- die Lage des Antriebs der Sägeblätter ist in der Lieferrichtung des Materials über einen Schlitten einstellbar,
- durch eine Umlenkeinheit erfolgt eine Absenkung des Transportbandes im jeweiligen Bereich der Sägeblätter, und
- der Vorgang der Materialabtrennung wird automatisch entsprechend der Schnittleistung der Trennmittel und der Vorschubgeschwindigkeit des Materialzuflusses geregelt.

Ein derartiges Material ist zum Beispiel Mineralwolle, das zum Versand in handelsübliche Platten aufgetrennt werden muss.

Dämmstoffe aus Mineralwolle bestehen aus glasig erstarrten Mineralfasern, die mit geringen Mengen eines Bindemittels, zumeist eines duroplastisch aushärtenden Kunststoffes prinzipiell punktweise miteinander verbunden sind. Die Mineralfasern werden aus einer Schmelze gewonnen, die in einem Zerfaserungsaggregat zerfasert wird. Handelsüblich werden Dämmstoffe aus Glaswolle und Steinwolle unterschieden.

Glaswolle - Fasern werden aus silikatischen Schmelzen mit relativ hohem Alkaligehalt, gegebenenfalls auch Boroxiden, in der Weise hergestellt, dass die Schmelze durch die feinen Wandöffnungen eines rotierenden Körpers hindurch geleitet wird. Dabei entstehen relativ lange und glatte Mineralfasern, die mit Bindemitteln und Imprägniermitteln versehen, auf ein luftdurchlässiges Transportband fallen.

Eine aus den Zerfaserungsaggregaten abgezogene endlose Faserbahn wird entsprechend der gewünschten Dicke und Rohdichte mehr oder weniger schnell abtransportiert. Die Aushärtung des, die Struktur des herzustellenden Dämmstoffs fixierenden, Bindemittels erfolgt in einem Härteofen, in dem Heißluft durch die Faserbahn hindurch geleitet wird. Anschließend wird die ausgehärtete Faserbahn seitlich beschnitten und beispielsweise in der Mitte in zwei Bahnen aufgetrennt, von denen nahezu verlustfrei Dämmstoffplatten mit einer bestimmten Länge und, im Rahmen der Bahnbreite, beliebigen Breiten abgetrennt werden können.

Dämmstoffe aus Steinfasern, insbesondere Dämmstoffplatten aus Steinfasern, lassen sich weniger leicht komprimieren als Dämmstoffe aus Glasfasern, da sie deutlich unterschiedliche Strukturen aufweisen, die sich im Wesentlichen in der, in sich verwirbelten, Form der kurzen Steinfasern zeigen, wobei die Steinfasern bereits auf dem Weg von der Zerfaserungsmaschine zu einem Transportband zu Flocken aggregieren. Die daraus hergestellten Dämmstoffe weisen beispielsweise über die Breite der Produktionslinie und die Höhe der Faserbahn sehr enge Schwankungen der Rohdichte auf.

Dämmstoffplatten aus Steinfasern werden mit üblichen Abmessungen von 1 m oder 1,2 m Länge bei einer Breite von 0,6 m oder 0,625 m und Dicken von ca. 20 mm bis ca. 240 mm hergestellt.

Dämmstoffplatten werden in großen Mengen produziert und müssen deshalb, bevor sie in Stapeln geordnet werden, erst in entsprechende Formate aufgetrennt werden.

Aus der Österreichischen Patentschrift AT 104894 ist zu einem vergleichbaren Zweck eine Kurbeltriebpendelsäge mit Förderband zum Verschieben des Schneidgutes bekannt geworden.

Diese Säge weist eine einstellbare Vorrichtung auf mit der die jeweils abzuschneidende Schnittlänge genau bemessen werden kann.

Mit dieser Vorrichtung lassen sich lediglich geringe Taktzeiten für die Abtrennung des Schneidgutes erreichen.

Aus der Schweizer Patentschrift CH 93038 ist eine Pendelsäge bekannt, die sich dadurch auszeichnet, dass das Sägeblatt mittels eines hängenden Lenkers an einer ortsfest gelagerten Wippe aufgehängt ist, so dass es durch Vor - und Zurückschwingen des hängenden Lenkers an der Wippe in waagrechter Bahn verschoben werden kann. Auch bei dieser Lösung lassen sich naturgemäß keine nennenswerten Taktzeiten erreichen.

In der DE 198 46 946 A1 sind Funktionsweisen von Punktkontakt - Pendelsägen beschrieben, wobei hierbei Sägen verstanden werden bei denen das Sägewerkzeug aus einem oder mehreren eingespannten parallelen Sägeblättern besteht. Für diese Bauform wird in dieser Schrift vorgeschlagen, dass die Pendelmasse, also der Sägerahmen mit den Sägeblättern nicht auf einer kreisförmigen Bahn pendelt, sondern auf einer doppelt zykloidischen Bahnkurve. Hinweise für den Bau einer Pendelsäge mit kreisförmigen Sägeblättern sind dieser Schrift jedoch nicht zu entnehmen.

Die Entwicklung in jüngerer Zeit geht dahin, Pendelsägen zu entwickeln die über hydraulische Vorrichtungen betätigt werden die teuer sind, relativ träge reagieren und aufwendige Steuerungsvorgänge erfordern. Ein druckschriftlicher Nachweis ist hierzu nicht bekannt.

Es ist daher die Aufgabe der vorliegenden Erfindung eine Vorrichtung und ein Verfahren zum schnellen und zuverlässigen Trennen von Materialien zu schaffen, die in einem fließbandähnlichen Produktionsprozess hergestellt werden.

Diese Aufgabe wird gelöst durch eine Vorrichtung nach dem Anspruch 1 und 2, bzw. ein Verfahren nach dem Anspruch 6, ein Computerprogramm nach dem Anspruch 7 und ein Träger nach dem Anspruch 8.

Die erfindungsgemäße Trennvorrichtung wird im Folgenden näher beschrieben.
Es zeigen im Einzelnen:
- Fig. 1:: die Trennvorrichtung in einer perspektivischen Schrägansicht,
- Fig. 2:: die Trennvorrichtung in einer perspektivischen Seitenansicht
- Fig. 3.: die Trennvorrichtung schräg von oben
- Fig. 4.: eine Detaildarstellung der Umlenkeinheit

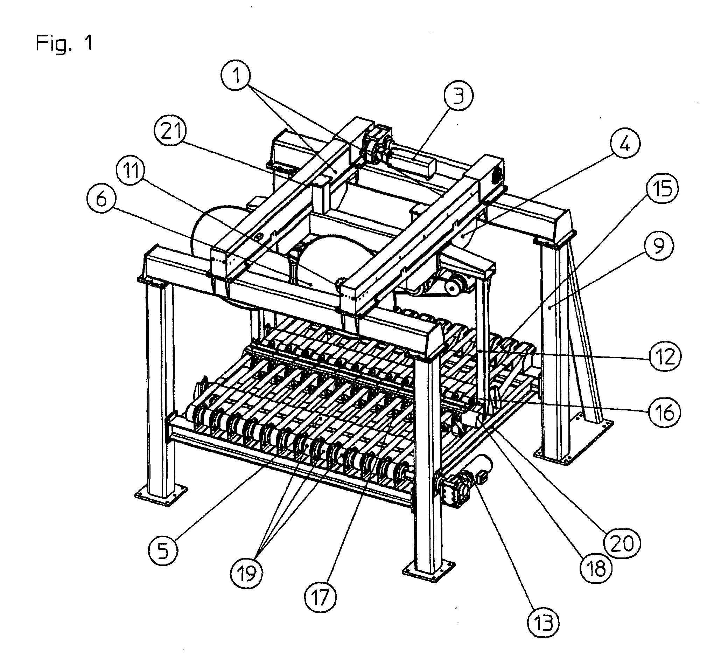

Die in der Figur 1 dargestellte Trennvorrichtung besteht im Wesentlichen aus einem Grundrahmen ( 9 ) der die beiden oberen Schlittenträger ( 1 ) als Traversen aufweist. An dem hinteren Schlittenträger ( 1 ) ist eine Laufschiene ( 21 ) für den Schlitten ( 4 ) befestigt der unter anderem die Lager und Aufnahmen ( 11 ) für die Sägeblätter ( 6 ) trägt.

Der Schlitten ( 4 ) lässt sich über einen Synchro - Antrieb ( 3 ) bewegen.

Der Schlitten ( 4 ) läuft einerseits auf der Laufschiene ( 21 ) und ist andererseits starr mit der Umlenkeinheit ( 12 ) verbunden. Diese Umlenkeinheit ( 12 ) weist ihrerseits einen Führungsschlitten auf, der auf der Laufschiene ( 20 ) läuft.

Bei einer sehr starren und stabilen Ausführung kann auf diesen Führungsschlitten der Umlenkeinheit ( 12 ) verzichtet werden.

Die Umlenkeinheit ( 12 ) stellt sicher, dass die Sägeblätter ( 6 ) im Bereich der Laufebene des Transportbandes ( 15 ) dieses nicht ungewollt zertrennen können. Dieses wird dadurch erreicht, dass das Transportband ( 15 ) im Bereich der

Sägblätter ( 6 ) in der Form einer V-förmigen oder U-förmigen Umleitung umgeleitet wird.

Die Umleitung ist verschiebbar ausgestaltet.

Da die Sägeblätter ( 6 ) ihrerseits über den Schlitten ( 4 ) verschiebbar sein müssen, ist die Umlenkeinheit ( 12 ) starr mit dem Schlitten ( 4 ) verbunden und bewegt sich deshalb synchron mit der Stellung der Sägeblätter ( 6 ).

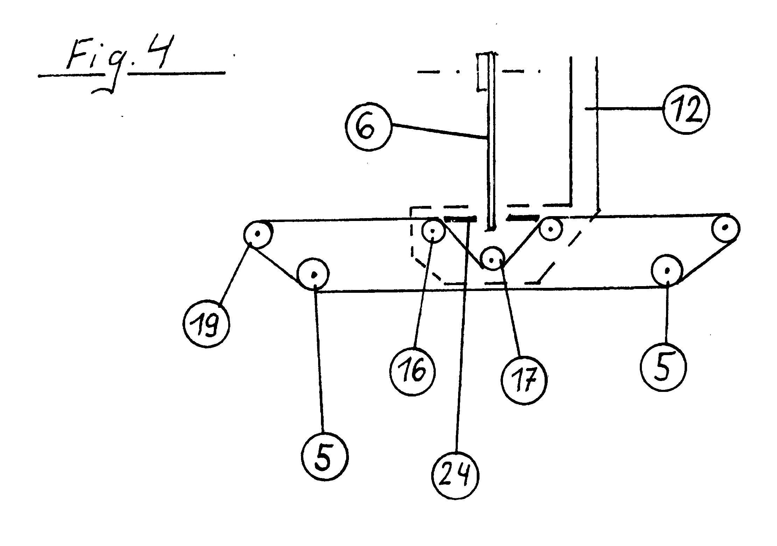

Die der Umlenkeinheit ( 12 ) zugehörigen oberen Umlenkrollen ( 16 ) und die untere Umlenkrolle ( 17 ) sind in der Fig. 1 wegen der perspektivischen Darstellung nur unklar zu erkennen und sind deshalb in der Fig. 4 noch einmal vergrößert herausgezeichnet.

Das Transportband ( 15 ) wird von dem Antrieb ( 13 ) über die Antriebsrolle ( 19 ) bewegt.

Im Bereich der Umlenkeinheit sorgt die Absaugvorrichtung ( 18 ) für die Entsorgung des Sägestaubs.

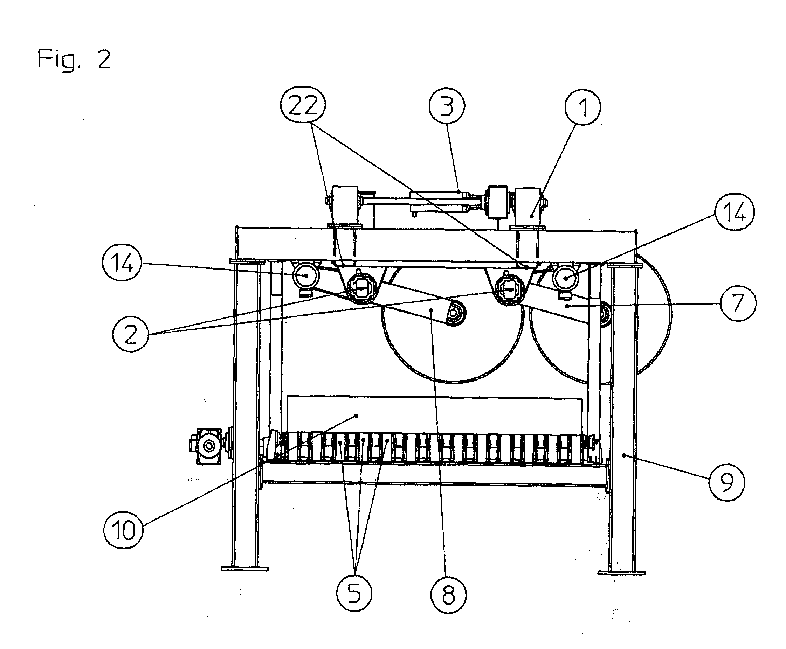

In der Seitenansicht der Fig. 2 ist, neben dem schon erwähnten Schlittenträger ( 1 ), dem Synchro - Antrieb ( 3 ) und dem Grundrahmen ( 9 ) jeweils eine Antriebseinheit . ( 2 ) für ein Sägeblatt ( 6 ) dargestellt. Die jeweilige Kraftübertragung von der Antriebseinheit ( 2 ) auf die Sägeblätter ( 6 ) erfolgt hierbei über ein Kraftübertragungselement ( 8 ). Ein solches Element ( 8 ) kann aus einem Zahnriemen, einer Kette oder auch aus einem Kardanantrieb bestehen.

Die zusätzliche Pendelbewegung der Sägeblätter ( 6 ) wird über das jeweilige Pendelelement ( 14 ) bewerkstelligt.

Die Sägeblätter ( 6 ) können im gleichen Drehsinn laufen oder auch gegenläufig betrieben werden. Hierbei ist auf die Zähnung zu achten.

Der gesamte Antrieb ist in einem Pendelgehäuse ( 7 ) geschützt untergebracht.

Auf dem Transportband ( 15 ) ist in dieser Darstellung ein, im Querschnitt

rechteckiger, zu trennender Werkstoff ( 10 ) skizziert.

Die Funktionseinheit ( 22 ) bezeichnet Sensoren der unterschiedlichsten Bauarten und Erfassungsbereiche. Je nachdem welche Werkstoffe von der erfindungsgemäßen Trennvorrichtung zu bearbeiten sind, sind unterschiedliche Parameter zu erfassen um die Betriebssicherheit der gesamten Anlage zu gewährleisten. So sind zum Beispiel neben der Erfassung der Drehzahl jedes Sägeblatts ( 6 ), dem Abfall der Drehzahl beim Eintauchvorgang in das Werkstück und der Temperatur im Trennbereich auch die unterschiedlichsten Parameter zu erfassen die auf unzulässige Vibrationen hindeuten. Gerade in diesem Bereich sind für jeden Werkstoff unterschiedliche charakteristische Werte zu beachten.

Bei dem Abtrennen von steinartigem Material wird beim Betrieb der Sägeblätter ( 6 ) die Einhaltung einer doppelt zykloidischen Bahnkurve bevorzugt. Diese wird im Wesentlichen dadurch erreicht, dass die Pendelbahn nicht kreisförmig ist. Nähere Angaben hierzu finden sich in der DE 198 46 946 A1, bei der kein Schutzrecht besteht und die daher freier Stand der Technik ist. Eine derartige Bahnkurve hat sich auch bei der Abtrennung anderer Materialien als vorteilhaft herausgestellt.

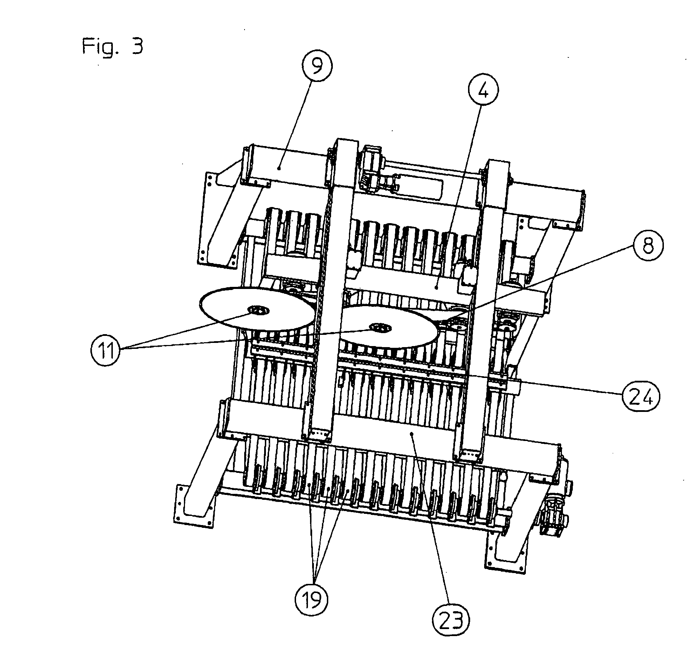

In der Darstellung der erfindungsgemäßen Trennvorrichtung schräg von oben der Fig. 3 ist zusätzlich die genaue Lage der Abdeckung des Sägespalts ( 24 ) zu erkennen.

Außerdem ist aus dieser Figur die exponierte Lage des Kamera - Systems ( 23 ) in Bezug zur gesamten Vorrichtung auszumachen. Der Begriff Kamera - System beinhaltet hierbei, jeweils nach dem Grad der erforderlichen Überwachung und der Ausbaustufe des automatischen Ablaufs, unterschiedliche Ausstattungsvarianten. So können neben der Erfassung von Stereo - Bildern auch Aufnahmen in speziellen Frequenzgebieten des Lichts, zum Beispiel im Infrarot - Bereich, erforderlich sein.

Die in der Fig. 4 im Detail gezeigte Bandführung zur Umlenkung des Transportbandes ( 15 ) im Bereich der Sägeblätter ( 6 ), zeigt einen in senkrechter Richtung sich erstreckenden Teil der Umlenkeinheit ( 12 ) dem gegenüber ein Sägeblatt ( 6 ) im Schnitt dargestellt ist.

Die oberen Umlenkrollen ( 16 ) und die untere Umlenkrolle ( 17 ) sind fester Bestandteil der Umlenkeinheit ( 12 ). Anstelle der einen, unteren Umlenkrolle ( 17 ) können auch zwei Umlenkrollen ( 17 ) verbaut werden.

Die Antriebsrolle ( 19 ), die auch in der Fig. 1 und Fig. 3 dargestellt ist , treibt das gesamte Transportband ( 15 ) an. Die Niederhalterollen ( 5 ), die oberen Umlenkrollen ( 16 ) und die untere Umlenkrolle ( 17 ), sowie die rechte, nicht näher bezeichnete, Rolle sorgen für den gezeichneten Verlauf des Transportbandes ( 15 ). Die Abdeckung ( 24 ) reduziert den Sägespalt auf das notwendige Maß.

Andere Mittel zum Abtrennen des jeweiligen Materials können auch in der erfindungsgemäßen Vorrichtung vorgesehen sein, wie zum Beispiel Laser und /oder Hochdruck / Wasserstrahlgeräte. Die Anlageteile, die die Träger für die Trennmittel darstellen, müssen in diesem Fall entsprechend umgebaut werden. Es ist auch in besonderen Fällen die Verwendung von Laser und / oder Hochdruck - Wasserstrahlgeräten in Verbindung mit den Sägeblättern ( 6 ) denkbar.

Für den Fall einer Abtrennung des anfallenden Materials über eine Laser - Vorrichtung oder über ein Hochdruck - Wasserstrahlgerät ist die Abdeckung ( 24 ) mit einer, einerseits die Rolle ( 17 ) schützenden, aber die Abtrennung andererseits sicher gewährleistenden entsprechenden Ausformung zu versehen.

Bei sämtlichen Antrieben werden, anstelle von zum Beispiel hydraulischen Antrieben, Servomotoren eingesetzt.

Die erfindungsgemäße Vorrichtung kann, vor allem wegen der präzise zu steuernden Servomotoren und der zahlreichen, über den Betriebsablauf informierenden, Sensoren automatisch betrieben werden. Ein entsprechendes Steuerungsprogramm ist von einem Fachmann zu erstellen.

Die erfindungsgemäße Vorrichtung kann mit einer Einrichtung zur Schalldämmung versehen sein. Im einfachsten Fall besteht diese aus einer schalldämmenden Umhüllung. Ein aufwändigeres Verfahren zu diesem Zweck besteht in der Schallreduzierung durch Phasenumkehr und Erzeugung von Gegenschall der am meisten störenden Frequenzanteile.

Bei der Beschickung der Anlage mit Mineralwolle - Platten wurde eine Taktzeit von 43 Schnitten pro Minute erreicht.

Da der Vorgang der Materialabtrennung automatisch abläuft und andererseits auch berücksichtigt werden muss, dass die Standzeit der Sägeblätter ( 6 ) beschränkt ist und sich am deutlichsten in einer geringeren Schnittleitung zeigt, wird bei der erfindungsgemäßen Vorrichtung die Schnittleistung erfasst. Am einfachsten kann dies geschehen über die Messung des Zeitintervalls das für einen oder mehrere Schnittvorgänge benötigt wird und den Vergleich mit dem entsprechenden Zeitintervall nach der Installation eines neuen Sägeblattes.

Zudem ist ersichtlich, dass die Messung der Vorschubgeschwindigkeit des abzutrennenden Materials für die Steuerung des automatischen Abtrennvorgangs erfasst werden muss.

### Bezugszeichenliste

- ( 1 ): Schlittenträger
- ( 2 ): Antriebseinheit für ein Sägeblatt
- ( 3 ): Synchro - Antrieb für den Hauptschlitten
- ( 4 ): Schlitten
- ( 5 ): Niederhalterollen
- ( 6 ): Sägeblatt
- ( 7 ): Pendelgehäuse
- ( 8 ): Kraftübertragungselement für den Sägeblattantrieb
- ( 9 ): Grundrahmen
- ( 10 ): Werkstoff
- ( 11 ): Lager und Aufnahme für ein Sägeblatt
- ( 12 ): Umlenkeinheit
- ( 13 ): Antrieb für Transportband
- ( 14 ): Antriebseinheit für Pendel
- ( 15 ): Transportband
- ( 16 ): obere Umlenkrolle
- ( 17 ): untere Umlenkrolle
- ( 18 ): Absaugvorrichtung für Sägestaub
- ( 19 ): Antriebsrolle
- ( 20 ): Laufschiene des Führungsschlittens für die Umlenkeinheit
- ( 21 ): Laufschiene für den Hauptschlitten
- ( 22 ): Sensor - System
- ( 23 ): Kamera - System
- ( 24 ): Abdeckung Sägespalt

## Patentansprüche

1. Vorrichtung zum Abtrennen von, in einem kontinuierlichen Produktionsprozess gelieferten, Dämmstoffen aus Mineralwolle in bestimmbare Längen enthaltend ein Transportband (15), ein Schlitten (4), Pendeleinheiten (14), und zwei Sägeblätter wobei
a) die Abtrennung des Materials erfolgt über zwei, pendelartig aufgehängte, separat angetriebene kreisförmige Sägeblätter ( 6 ),
b) die Lage der Aufhängung ( 1 ) und des Antriebs ( 2 ) der Sägeblätter ( 6 ) ist in der Lieferrichtung des Materials über den Schlitten ( 4 ) einstellbar,
c) der Antrieb (3) des Schlittens (4), der Antrieb der Sägeblätter (6), der Antrieb der Pendeleinheiten ( 14 ), sowie der Antrieb des Transportbandes ( 15 ) erfolgen über Servomotoren,
d) durch eine Umlenkeinheit ( 12 ) erfolgt eine Absenkung des Transportbandes ( 15 ) im jeweiligen Bereich der Sägeblätter ( 6 ),
e) der Vorgang der Materialabtrennung wird automatisch entsprechend der Schnittleistung der Trennmittel und der Vorschubgeschwindigkeit des Materialzuflusses geregelt.

2. Vorrichtung nach Anspruch 1, wobei die Sägeblätter (6) sich auf einer doppelt zykloidischen Bahnkurve bewegen.

3. Vorrichtung nach einem der Ansprüche 1 oder 2,
**dadurch gekennzeichnet,**
**dass** die Laufrichtung der Sägeblätter gegenläufig ist.

4. Vorrichtung nach einem der Ansprüche 1 oder 2
**dadurch gekennzeichnet,**
**dass** die Abtrennung des Materials über Laser erfolgt, wobei die Umlenkeinheit ( 12 ) einen zusätzlichen Schutz gegen Laserstrahlen erhält.

5. Vorrichtung nach einem der Ansprüche 1 oder 2
**dadurch gekennzeichnet,**
**dass** die Abtrennung des Materials über einen Hochdruck-Wasserstrahl erfolgt, wobei die Umlenkeinheit ( 12 ) einen zusätzlichen Schutz gegen Wasserstrahlen erhält.

6. Verfahren zum Abtrennen von, in einem kontinuierlichen Produktionsprozess gelieferten, Dämmstoffen aus Mineralwolle in bestimmbare Längen , mit den folgenden Merkmalen:
a) die Abtrennung des Materials erfolgt über zwei, pendelartig aufgehängte, separat angetriebene kreisförmige Sägeblätter ( 6 ),
b) die Lage der Aufhängung ( 1 ) und des Antriebs ( 2 ) der Sägeblätter ( 6 ) ist in der Lieferrichtung des Materials über einen Schlitten ( 4 ) einstellbar,
c) der Antrieb des Schlittens ( 3 ), der Antrieb der Sägeblätter ( 2 ),der Antrieb der Pendeleinheiten ( 14 ), sowie der Antrieb des Transportbandes ( 15 ) erfolgen über Servomotoren,
d) durch eine Umlenkeinheit ( 12 ) erfolgt eine Absenkung des Transportbandes ( 15 ) im jeweiligen Bereich der Sägeblätter ( 6 ),
e) der Vorgang der Materialabtrennung wird automatisch entsprechend der Schnittleistung der Trenn - Mittel und der Vorschubgeschwindigkeit des Material - Zuflusses geregelt,
f) die Sägeblätter ( 6 ) bewegen sich auf einer doppelt zykloidischen Bahnkurve.

7. Computerprogramm mit einem Programmcode zur Durchführung der Verfahrensschritte nach Anspruch 6, wenn das Programm in einem Computer ausgeführt wird.

8. Maschinenlesbarer Träger mit dem Programmcode eines Computerprogramms zur Durchführung des Verfahrens nach Anspruch 6, wenn das Programm in einem Computer ausgeführt wird.

## Claims

1. Device for separating insulating materials comprising mineral wool, supplied in a continuous production process, into determinable lengths, comprising a transporting belt (15), a carriage (4), pendulum units (14), and two saw blades, wherein
a) the separating of the material is performed by way of two circular saw blades (6), which are suspended in a pendular manner and are driven separately,
b) the position of the suspension (1) and of the drive (2) of the saw blades (6) can be adjusted by way of the carriage (4) in the direction in which the material is supplied,
c) the drive (3) of the carriage (4), the drive of the saw blades (6), the drive of the pendulum units (14) and the drive of the transporting belt (15) is performed by way of servomotors,
d) a lowering of the transporting belt (15) in the respective region of the saw blades (6) is performed by a deflecting unit (12),
e) the material separating operation is controlled automatically in accordance with the cutting performance of the separating means and the advancing rate of the material inflow.

2. Device according to Claim 1, the saw blades (6) moving on a path describing a double cycloid curve.

3. Device according to either of Claims 1 and 2, **characterized in that** the saw blades run in opposite directions.

4. Device according to either of Claims 1 and 2, **characterized in that** the separating of the material is performed by way of a laser, the deflecting unit (12) receiving additional protection from laser beams.

5. Device according to either of Claims 1 and 2, **characterized in that** the separating of the material is performed by way of a high-pressure water jet, the deflecting unit (12) receiving additional protection from water jets.

6. Method for separating insulating materials comprising mineral wool, supplied in a continuous production process, into determinable lengths, comprising the following features:
a) the separating of the material is performed by way of two circular saw blades (6), which are suspended in a pendular manner and are driven separately,
b) the position of the suspension (1) and of the drive (2) of the saw blades (6) can be adjusted by way of a carriage (4) in the direction in which the material is supplied,
c) the drive (3) of the carriage ( 4 ), the drive of the saw blades (6), the drive of the pendulum units (14) and the drive of the transporting belt (15) is performed by way of servomotors,
d) a lowering of the transporting belt (15) in the respective region of the saw blades (6) is performed by a deflecting unit (12),
e) the material separating operation is controlled automatically in accordance with the cutting performance of the separating means and the advancing rate of the material inflow,
f) the saw blades (6) move on a path describing a double cycloid curve.

7. Computer program with a program code for carrying out the method steps according to Claim 6 when the program is executed in a computer.

8. Machine-readable carrier with the program code of a computer program for carrying out the method according to Claim 6 when the program is executed in a computer.

## Revendications

1. Dispositif de séparation de matériaux d'amortissement en laine minérale, fournis dans un processus de production continu, en longueurs déterminables, contenant une bande transporteuse (15), un chariot (4), des unités pendulaires (14) et deux lames de scie,
a) la séparation du matériau s'effectuant par le biais de deux lames de scie de forme circulaire (6) entraînées séparément, suspendues de manière pendulaire,
b) la position de la suspension (1) et de l'entraînement (2) des lames de scie (6) pouvant être ajustée dans la direction d'alimentation du matériau par le biais du chariot (4),
c) l'entraînement (3) du chariot (4), l'entraînement des lames de scie (6), l'entraînement des unités pendulaires (14) ainsi que l'entraînement de la bande transporteuse (15) s'effectuant par le biais de servomoteurs,
d) un abaissement de la bande transporteuse (15) s'effectuant par une unité de déflexion (12) dans la région respective des lames de scie (6),
e) l'opération de séparation du matériau étant régulée automatiquement en fonction de la puissance de coupe des moyens de séparation et de la vitesse d'avance du flux de matériau.

2. Dispositif selon la revendication 1, dans lequel les lames de scie (6) se déplacent sur une trajectoire courbe en forme de double cycloïde.

3. Dispositif selon l'une quelconque des revendications 1 ou 2,
**caractérisé en ce que**
le sens d'avance des lames de scie est contraire.

4. Dispositif selon l'une quelconque des revendications 1 ou 2,
**caractérisé en ce que**
la séparation du matériau s'effectue par laser, l'unité de déflexion (12) disposant d'une protection supplémentaire contre les faisceaux laser.

5. Dispositif selon l'une quelconque des revendications 1 ou 2,
**caractérisé en ce que**
la séparation du matériau s'effectue par le biais d'un jet d'eau à haute pression, l'unité de déflexion (12) disposant d'une protection supplémentaire contre les jets d'eau.

6. Procédé pour la séparation de matériaux d'amortissement en laine minérale, fournis dans un processus de production continu, en longueurs déterminables, comprenant les caractéristiques suivantes .
a) la séparation du matériau s'effectue par le biais de deux lames de scie de forme circulaire (6) entraînées séparément, suspendues de manière pendulaire,
b) la position de la suspension (1) et de l'entraînement (2) des lames de scie (6) peut être ajustée dans la direction d'alimentation du matériau par le biais d'un chariot (4),
c) l'entraînement (3) du chariot (4), l'entraînement des lames de scie (6), l'entraînement des unités pendulaires (14) ainsi que l'entraînement de la bande transporteuse (15) s'effectuent par le biais de servomoteurs,
d) un abaissement de la bande transporteuse (15) s'effectue par une unité de déflexion (12) dans la région respective des lames de scie (6),
e) l'opération de séparation du matériau est régulée automatiquement en fonction de la puissance de coupe des moyens de séparation et de la vitesse d'avance du flux de matériau,
f) les lames de scie (6) se déplacent sur une trajectoire courbe en forme de double cycloïde.

7. Programme informatique comprenant un code programme pour mettre en oeuvre les étapes du procédé selon la revendication 6, lorsque le programme est exécuté dans un ordinateur.

8. Support lisible en machine comprenant le code programme d'un programme informatique pour mettre en oeuvre le procédé selon la revendication 6, lorsque le programme est exécuté dans un ordinateur.
